# EUROPÄISCHE PATENTSCHRIFT

(11) **EP 0 477 714 B1**
(45) Veröffentlichungstag und Bekanntmachung des Hinweises auf die Patenterteilung: **01.06.1994**
(21) Anmeldenummer: 91115685.9
(22) Anmeldetag: 16.09.1991
(51) Int. Cl.: B23D 51/06, B23D 47/06, B21D 43/26

(54) **Anschlagmittel für einer Werkzeugmaschine zuführbare Werkstücke**
Stopper means for feedable workpieces of a machine tool
Dispositif de fixation pour pièces à usiner d'une machine outil

(30) Priorität: 26.09.1990 IT 2182490 U
(43) Veröffentlichungstag der Anmeldung: 01.04.1992
(73) Patentinhaber: SALA S.p.A., I-38056 Levico (IT)
(72) Erfinder: Mosca, Claudio, I-38056 Levico (IT); Andreatta, Livio, I-38056 Levico (IT)
(74) Vertreter: Mayer, Hans Benno, Dipl.-Ing.

(56) Entgegenhaltungen:
- DE-A- 2 225 136
- DE-A- 3 025 320
- DE-A- 3 831 210

## Beschreibung

Die vorstehende Erfindung betrifft Anschlagmittel fuer einer Werkzeugmaschine zufuehrbare Werkstuecke, z.B. Rohre oder Stangenmaterial, die einer Saegemaschine zugefuehrt werden. (Siehe z.B. DE-A-3831210).

Es ist bekannt, dass in Saegemaschinen die Laenge eines abzutrennenden Werkstueckes durch Verwendung mechanischer Anschlagmittel festgelegt wird. Diese mechanischen Anschlagmittel befinden sich in festgelegtem Abstand gegenueber dem Saegeblatt. Die bekannten Anschlagvorrichtungen weisen den Nachteil auf, dass sie nur das Absaegen von Werkstuecken mit einheitlicher Laenge gestatten, in modernen Saegemaschinen besteht aber auch die Notwendigkeit, Werkstuecke mit "gemischter" Laenge abzuschneiden, d.h. Werkstuecke mit unterschiedlichen Laengen in beliebiger Reihenfolge abzusaegen.

Es ist daher Aufgabe der Erfindung, Anschlagmittel vorzuschlagen, die hochgenau arbeiten und in automatisch arbeitenden Werkzeugmaschinen, z.B. Saegemaschinen, einsetzbar sind und die Moeglichkeit schaffen, Werkstuecke mit konstanter Laenge oder Werkstuecke mit variabler Laenge praesize abzuschneiden.

Diese Aufgabe wird erfindungsgemaess dadurch geloest, dass im Anschluss an das Saegeblatt und laengs des Maschinenbettes Anschlagmittel vorgesehen sind, wobei jedes Anschlagmittel aus einem Kniehebel besteht, der aus einer Anschlagstellung in eine Ruhelage verschwenkbar ist, und das dem abzutrennenden Werkstueck zugeordnete Ende eines jeden Kniehebels eine Kolben-Zylindereinheit aufnimmt, die entgegen der Wirkung eines Federmittels gegen eine mechanisch festgelegte Anschlagstellung verschiebbar ist, dass das verbleibende Ende des Kniehebels an einem Schwenk- und und Verstellbolzen gelagert ist und dieses Ende des Kniehebels durch ein Federmittel beaufschlagt ist, um Gleitkugeln, die im Koerper des Kniehebels angeordnet sind, gegen Steuerkurven zu druecken, die in Arbeitsstellung des Anschlagmittels eine gegenueber dem abzutrennenden Werkstueck vorgeschobene Stellung festlegen und in Ruhelage eine gegenueber dem Werkstueck zurueckgefahrene Stellung festlegen.

Mit einem Anschlagmittel dieser Art wird es moeglich, mit groesster Genaugikeit die Lage des Anschlagmittels festzulegen. Der Praezisionsanschlag wird durch einen mechanischen Anschlag festgelegt und gleichzeitig ist es moeglich, den Anschlag aus einer Arbeitsstellung in eine Ruhelage zu verschwenken. Ferner wird es moeglich, das abgetrennte Werkstueck unbehindert aus der Saegemaschine abzufoerdern und das stangenfoermige Material bis zu einem anderen Anschlagmittel zu verschieben, was die Moeglichkeit eroeffnet, Werkstuecke mit variabler Laenge von der Stange abzusaegen.

Der Erfindungsgegenstand wird nun genauer anhand eines Ausfuehrungsbeispiels beschrieben und in den beigefuegten Zeichnungen dargestellt.

Es zeigen:
Fig. 1 eine Draufsicht der erfindungsgemaessen Vorrichtung;
Fig. 2 eine Vorderansicht der Vorrichtung in Richtung der Pfeile II-II der Fig. 1; und

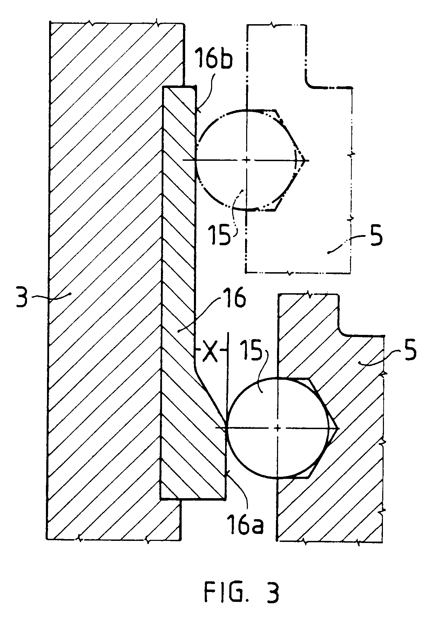

Fig. 3 eine Detaildarstellung der Steuerkurve im Schnitt entlang der Linie III-III der Fig. 1.

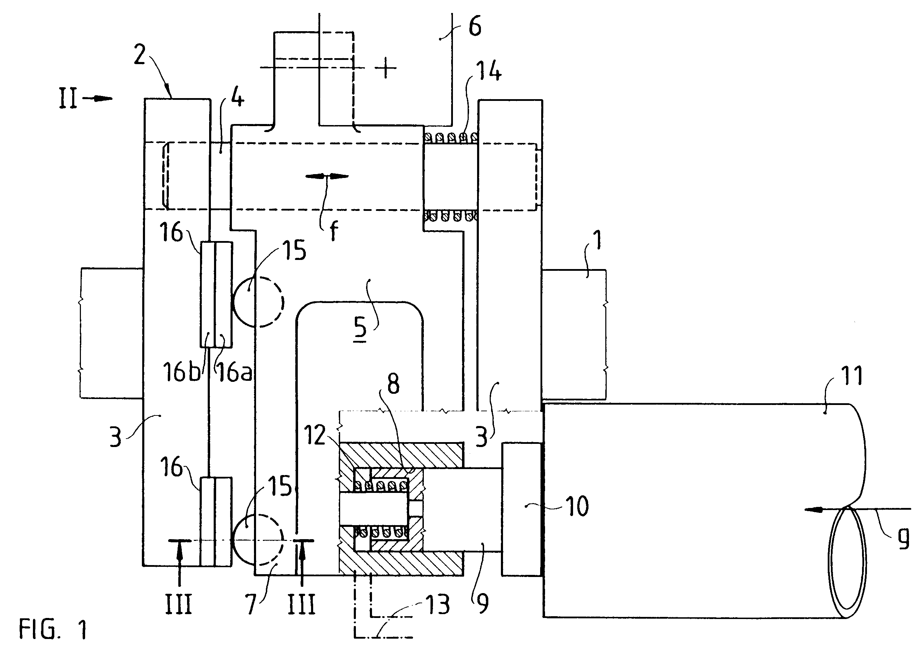

Wie der Fig. 1 zu entnehmen ist, nimmt das Grundgestell der Werkzeugmaschine unter Zuhilfenahme einer Schiene oder einer Fuehrungsbahn einstellbare Anschlagmittel auf, die gesamthaft mit 2 gekennzeichnet sind. Der Koerper 3 eines jedes Anschlagmittels ist laengs der Fuehrungsbahn 1 verschiebbar und nimmt unter Zuhilfenahme eines Zapfens 4 einen Kniehebel 5 auf. In der Naehe des Zapfens 4 ist jeder Kniehebel mit einer Kolben-Zylindereinheit 6 wirkverbunden. Die Kolben-Zylindereinheit ist vorgesehen, um dem Kniehebel 5 eine Schwenkbewegung um den Zapfen 4 zu verleihen.

Das freie Ende 7 des Kniehebels 5 nimmt in einer Ausnehmung 8 einen Arbeitszylinder 9 auf, der eine Verdickung 10 aufweist, die als Anschlag, z.B. fuer eine Stange oder ein Rohr 11 dient. Der Arbeitszylinder 9 kann im Inneren der Ausnehmung 8 eine Verschiebebewegung durchfuehren, die gegen die Wirkung eines Federmittels 12 erfolgt. Sobald das freie Ende des Arbeitszylinders 9 mit dem Boden der Ausnehmung 8 in Verbindung tritt, ist die Endstellung des Anschlags 10 erreicht. Sobald der Arbeitszylinder 9 in mechanische Beruehrung mit dem Boden der Ausnehmung 8 kommt, wird ein nicht dargestellter an sich bekannter Sensor betaetigt, der ueber Leitungen 13 einer Vorrichtung zur numerischen Steuerung der Werkzeugmaschine Steuersignale zufuehrt, die z.B. dazu dienen, den Schliessvorgang der hydraulischen Spannbacken, sowie den Saegevorgang einzuleiten.

Der Kniehebel 5 fuehrt nicht nur eine Schwenkbewegung um den Zapfen 4 aus, sondern, dank der Vorsehung eines Federmittels 14, das zwischen dem Vorderteil 3 und dem Kniehebel 5 angeordnet ist, kann dieser auch eine Verschiebebewegung in Richtung des Pfeils f durchfuehren.

Auf der den Anschlaegen 10 gegenueberliegenden Seite des Kniehebels 5 sind z.B. zwei Gleitkugeln 15 angeordnet, die im Koerper des Kniehebels gelagert sind. Durch das Federmittel 14 werden die Gleitkugeln 15 gegen Steuerkurven 16 gedrueckt. Die Steuerkurven 16 sind mit dem Koerper 3 der Vorrichtung verbunden. Die Steuerkurven oder -nocken 16 weisen einen unteren Bahnverlauf 16a mit groesserer Dicke, sowie einen oberen Bahnverlauf 16b mit geringerer Materialdicke auf.

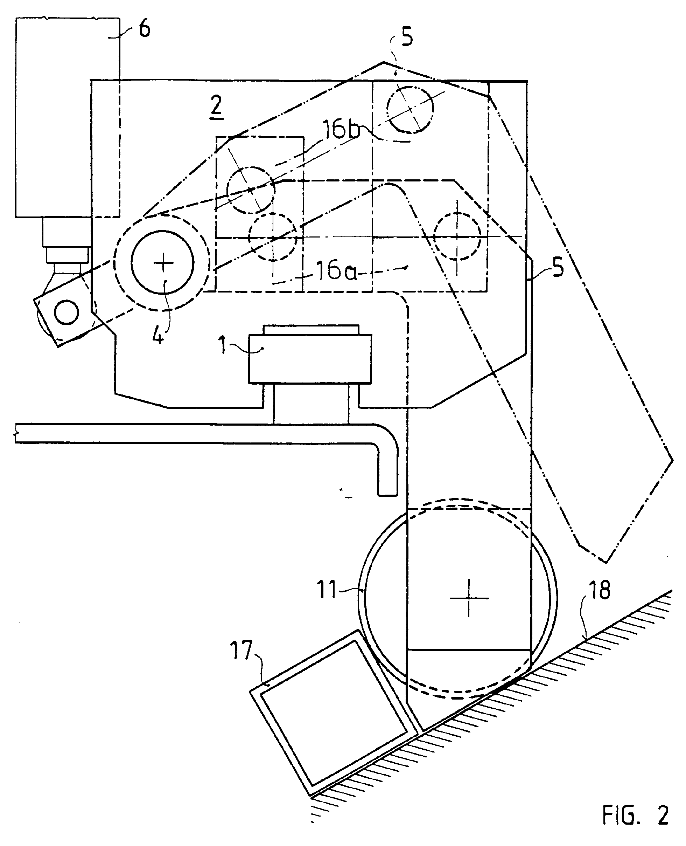

In der Naehe des Schwenkzapfens 4 ist der Kniehebel 5 mit einer Kolben-Zylindereinheit 6 wirkverbunden. Diese Kolben-Zylindereinheit 6 wird ueber Steuersignale der NC-Einrichtung der Werkzeugmaschine beeinflusst, und zwar in der Art, dass der Kniehebel 5 aus einer mit durchgehenden Linien dargestellten Anschlagstellung (in der die Einrichtung als Anschlag fuer das Werkstueck 11 dient), in eine Ruhelage verschwenkbar, die in der Zeichnung mit Strichpunktlinien dargestellt ist. Bei angehobenen Kniehebel 5 kann sich das Werkstueck 11 unbehindert bewegen, was ein einfaches Entladen des abgesaegten Werkstueckes, z.B. unter Vorsehung eines verschwenkbaren Spannbackens 11, der schematisch in Fig. 2 dargestellt ist, ermoeglicht.

Bei angehobenem Kniehebel 5, wie dies mit Strichpunktlinien in Fig. 2 dargestellt ist, kann das Werkstueck 11 ungehindert auf einer geneigten Ebene 18 so lange verschoben werden, bis ein folgendes Anschlagmittel erreicht wird. Dies schafft die Moeglichkeit, Werkstuecke 11 mit unterschiedlicher Laenge abzutrennen, ohne dass dafuer Einstellarbeiten notwendig waeren.

Die Arbeitsweise der erfindunggemaessen Anschlagmittel ist folgende:

Wird ein Kniehebel 5 in Arbeitsstellung gebracht (abgesenkte Anschlagstellung), kommt das in Pfeilrichtung g zugefuehrte Werkstueck 11 in Beruehrung mit dem Anschlag 10, und der Arbeitskolben 9 wird gegen die Wirkung des Federmittels 12 in das Innere der Ausnehmung 8 solange verschoben, bis der Arbeitskolben in mechanischen Anschlag mit dem Boden der Ausnehmung 8 tritt. Dies bewirkt (unter Verwendung bekannter, nicht dargestellter und genauer beschriebener Sensoren) die Bildung eines Steuersignales, das z.B. ueber Steuerleitungen 13 einer NC-Einrichtung der Werkzeugmaschine zugefuehrt wird. Ueber die elektronische Steuervorrichtung wird das Schliessen nicht dargestellter Spannbacken, sowie das Einleiten des Saegevorganges hervorgerufen.

Wuerde versucht werden, das Werkstueck nach Durchfuehrung des Saegevorganges und der Verwendung der beschriebenen Anschlagvorrichtung zu entladen, so koennte die Tendenz festgestellt werden, dass das Federmittel 12 des Anschlagmittels 9, 10 bestrebt waere, sich zu entspannen. Dies haette zur Folge, dass das bereits abgesaegte Werkstueck 11 in Richtung des Saegeblattes verschoben werden wuerde. Um diesem Nachteil entgegenzutreten, wird eine Vorrichtung vorgeschlagen, die gewaehrleistet, dass der Anschlag 10 auf Abstand vom freien Ende des abgesaegten Werkstueckes 11 gebracht wird.

Diese Vorrichtung besteht im wesentlichen aus dem Schwenkzapfen 4 einer Verschiebefeder 14 sowie der Teilekombination, bestehend aus Gleitkugeln 15 und Steuerkurven 16a, 16b.

Tatsaechlich wird waehrend der Schwenkbewegung des Kniehebels 5 durch Betaetigen des Arbeitskolbens 6 auch ein Verschieben des Kniehebels 5 durch Federwirkung erzielt, wodurch der Anschlag 10 gegenueber dem Werkstueck 11 auf Abstand gebracht wird. Dies erfolgt waehrend der Schwenkbewegung des Kniehebels in seine Ruhelage dadurch, dass die Gleitkugeln 16 von der dicker ausgebildeten Steuerbahn 16a rasch zur duenner ausgebildelten Steuerbahn 16b laufen, wodurch eine axiale Verschiebebewegung (X) des Kniehebels 5 hervorgerufen wird. Durch diese Massnahme wird der Anschlag 10 vom Ende des Werkstueckes 11 entfernt. Dies hat zur Folge, dass waehrend des Entladevorganges des Werkstueckes 11 dieses nicht mehr mit dem Anschlag 10 in Beruehrung steht und somit auch nicht mehr in unerwuenschter Weise durch das Federmittel 12 beeinflusst wird. Es kann ein einwandfreier Entladevorgang des Werkstueckes 11 entlang der geneigten Ebene 18 erfolgen.

Bei angehobenem Kniehebel 5, d.h. bei sich in Ruhelage befindlichem Kniehebel, liegt die geneigte Ebene 18 vollkommen frei. Diese Tatsache erlaubt es, das Rohr 11 oder ein andersartig ausgebildetes stangenfoermiges Werkstueck so lange zu verschieben, bis das Ende der Materialstange erneut auf ein Anschlagmittel 10 trifft, das entlang der Fuehrungsbahn 1 angeordnet ist.

Wenn es erwuenscht ist, den nach dem Saegeblatt erstliegenden Anschlag erneut zu verwenden, erfolgt eine erneute Betaetigung der Kolben-Zylindereinheit, diesmal in entgegengesetzter Richtung, was dazu fuehrt, dass der Kniehebel 5 erneut nach unten verschwenkt wird. Diese Schwenkbewegung ruft wiederum ein Abrollen der Gleitkugeln von der duenner ausgebildeten Kurvenbahn 16b der Steuerkurve 16 zur dicker ausgebildeten Kurvenbahn 16a hervor, was zu einer erneuten, genauen Verschwenkung des Anschlages 10 in dessen Arbeitsstellung fuehrt.

Durch Vorsehung einer einfachen mechanischen Einrichtung, bestehend aus Federmittel 14, Gleitkugeln 15 und Steuerkurven 16a, 16b, wird gewaehrleistet, dass auch bei schwenkbar gegenueber der Werkstueckachse 1 gelagertem Anschlagmittel, der Materialanschlag 5 stets eine Anschlagstellung mit groesster Genauigkeit einnimmt.

## Patentansprüche

1. Anschlagmittel (2, 3) fuer einer Werkzeugmaschine zufuehrbare Werkstuecke (11), besonders fuer eine Saegemaschine, wobei die Anschlagmittel (2,3) im Anschluss an das Saegeblatt vorgesehen sind, und laengs dem Maschinengestell einstellbar angeordnet sind**,** **dadurch gekennzeichnet,** dass jedes Anschlagmittel (2, 3) einen Kniehebel (5) aufweist, der von einer Anschlagstellung in eine Ruhelage verschwenkbar ist und das dem abzutrennenden Werkstueck (1) zugeordnete Ende eines jeden Kniehebels (5) eine Kolben-Zylindereinheit (9) aufnimmt, die entgegen der Wirkung eines Federmittels (12) gegen eine mechanisch festgelegte Anschlagsstellung verschiebbar ist, dass das gegenüberliegende Ende des Kniehebels an einem Schwenk- und Verschiebezapfen (4) gelagert ist und von einem Federmittel (14) beaufschlagt ist, durch welches Gleitkugeln (15), die im Koerper des Kniehebels (5) gelagert sind, gegen Steuerkurven (16) gedrueckt werden, die in Arbeitsstellung des Anschlagmittels (10) eine gegenueber dem abzutrennenden Werkstueck (11) vorgeschobene Lage (16a) und, bei sich in Ruhelage befindlichem Anschlag (10), eine gegenueber dem Werkstueck (11) zurueckgefahrene Lage (16b) bestimmen.

2. Anschlagmittel, nach Patentanspruch 1, **dadurch gekennzeichnet**, dass eines oder mehrere der Anschlagmittel (5) auf einer Fuehrungsbahn (1) angeordnet sind, die sich in Laengsrichtung des Maschinengestells erstrecken.

3. Anschlagmittel, nach Patentanspruch 1, **dadurch gekennzeichnet**, dass der Kniehebel (5) ueber eine steuerbare Kolben-Zylindereinheit (6) angetrieben ist.

4. Anschlagmittel, nach Patentanspruch 1, **dadurch gekennzeichnet**, dass das freie Ende (7) des Kniehebels (5) eine Ausnehmung (8) aufweist, die einen Arbeitszylinder (9) aufnimmt, der eine Verdickung (10) aufweist, die als Anschlag fuer das Werkstueck (11) dient, und der Zylinder (9) eine Verschiebebewegung gegen die Kraft eines Federmittels (12) durchfuehrt und dass in der Naehe des Bodens der Ausnehmung (8) ein an sich bekannter Generator zur Erzeugung von Steuersignalen vorgesehen ist.

5. Anschlagmittel, nach Patentanspruch 1, **dadurch gekennzeichnet**, dass der Kniehebel (5), Gleitkugeln (15) aufnimmt, die entlang einer Steuerkurve (16) abrollen, die ein Teilstueck mit groesserer Dicke (16a) und ein Teilstueck (16b) mit geringerer Dicke aufweist.

## Claims

1. Stopper means (2, 3) for feedable workpieces (11) of a machine tool, especially for a sawing machine, the stopper means (2, 3) being provided adjacent to the saw blade and being arranged adjustably along the machine frame, characterized in that each stopper means (2, 3) has a toggle lever (5) which is pivotable from a stopping position into a position of rest, and the end of each toggle lever (5) assigned to the workpiece (1) to be severed receives a piston/cylinder unit (9) which is displaceable, counter to the effect of a spring means (12), towards a mechanically fixed stopping position, and in that the opposite end of the toggle lever is mounted on a pivoting and shifting pin (4) and is loaded by a spring means (14) by which sliding balls (15) mounted in the body of the toggle lever (5) are pressed against control cams (16) which, in the working position of the stopper means (10), define a position (16a) advanced relative to the workpiece (11) to be severed and, with the stopper (10) located in the position of rest, define a position (16b) retracted relative to the workpiece (11).

2. Stopper means according to Patent Claim 1, characterized in that one or more of the stopper means (5) are arranged on a guide track (1) extending in the longitudinal direction of the machine frame.

3. Stopper means according to Patent Claim 1, characterized in that the toggle lever (5) is driven via a controllable piston/cylinder unit (6).

4. Stopper means according to Patent Claim 1, characterized in that the free end (7) of the toggle lever (5) has a recess (8) which receives a working cylinder (9) having a thickening (10) serving as a stopper for the workpiece (11), and the cylinder (9) executes a shifting movement counter to the force of a spring means (12), and in that a generator known per se is provided in the vicinity of the bottom of the recess (8) for the generation of control signals.

5. Stopper means according to Patent Claim 1, characterized in that the toggle lever (5) receives sliding balls (15) which roll along a control cam (16) having a portion of larger thickness (16a) and a portion (16b) of smaller thickness.

## Revendications

1. Moyens de butée (2, 3) pour une pièce à usiner (11) pouvant être amenée à une machine-outil, en particulier pour une scie mécanique, dans laquelle les moyens de butée (2, 3) sont prévus à la suite de la lame de la scie, et sont disposés de manière ajustable le long du bâti de la machine, caractérisés en ce que chaque moyen de butée (2, 3) présente une genouillière (5) que l'on peut faire pivoter d'une position de butée à une position de repos et l'extrémité de chaque genouillière (5), correspondant à la pièce à usiner (11) devant être sectionnée, reçoit une unité cylindre-piston (9), qui est déplaçable à l'encontre de l'action d'un moyen à ressort (12) contre une position de butée déterminée mécaniquement, en ce que l'extrémité opposée de la genouillière est articulée à un axe de pivotement et de déplacement (4) et sollicitée par un moyen à ressort (14), par lequel des billes de glissement (15), qui sont placées dans le corps de la genouillière (5), sont pressées contre des cames de commande (16), qui définissent en position de travail du moyen de butée (10) une position avancée (16a) par rapport à la pièce à usiner (11) devant être sectionnée, et, en position de repos de la butée (10), une position rétractée (16b) par rapport à la pièce à usiner (11).

2. Moyens de butée selon la revendication 1, caractérisés en ce qu'un ou plusieurs des moyens de butée (5) sont disposés sur une glissière de guidage (1), qui s'étend dans le sens longitudinal du bâti de la machine.

3. Moyens de butée selon la revendication 1, caractérisés en ce que la genouillière (5) est entraînée par une unité cylindre-piston (6) commandable.

4. Moyens de butée selon la revendication 1, caractérisés en ce que l'extrémité libre (7) de la genouillière (5) présente un évidement (8) qui reçoit un cylindre de travail (9) qui présente un épaississement (10) qui sert de butée à la pièce à usiner (11), et le cylindre (9) effectue un mouvement de déplacement à l'encontre de la force d'un moyen à ressort (12), et en ce qu'il est prévu à proximité du fond de l'évidement (8) un générateur connu en soi pour émettre des signaux de commande.

5. Moyens de butée selon la revendication 1, caractérisés en ce que la genouillière (5), reçoit des billes de glissement (15), qui roulent le long d'une came de commande (16), qui présente un tronçon de plus grosse épaisseur (16a) et un tronçon (16b) de plus faible épaisseur.
